# EUROPEAN PATENT APPLICATION

(11) **EP 4 268 581 A1**
(43) Date of publication of application: **01.11.2023**
(21) Application number: 21909605.4
(22) Date of filing: 02.03.2021
(51) Int. Cl.: A01G 31/04

(54) **AEROPONIC CULTURE FACILITY**

(30) Priority: 26.12.2020 ES 202031302
(71) Applicant: Inspiralia Vertical Green S.L., 28034 Madrid (ES)
(72) Inventor: SCAGNETTI MORENO, Hugo, 28034 Madrid (ES); REPISO INGLES, Carlos, 28034 Madrid (ES)
(74) Representative: Urizar Anasgasti, José Antonio
(86) International application number: PCT/ES2021/070153
(87) International publication number: WO 2022/136709

(57) **Abstract**

Installation of aeroponic cultivation, consisting of an enclosure with one or more rails (2) for guiding carts (4) carrying hollow vertical structures (3) supporting the plants (5). It has at least one irrigation point formed by at least one mobile atomization nozzle (7) in a direction parallel to the rail (2) and configured to automatically align itself with the structure (3). This ensures accurate and perfect irrigation and allows the reduction of infrastructure.

The nozzles (7) are associated with sensors configured to detect the position of the structure (3) or cart (4).

## Description

### OBJECT OF THE INVENTION

The invention refers to a new design of cultivation installation, especially for aeroponic cultivation. This design notably improves the feeding of plants in installations of cultivation with mobile supports.

### BACKGROUND TO THE INVENTION

The cultivation of plants in tubes or other vertical structures is known in the state of the art. US2020037524 and US10499575 are two examples of interest showing the starting point of the invention. In the first case, a carousel hydroponic cultivation passes through four different stations. The second document discloses an aeroponic installation.

Cultivation in mobile vertical structures is simple when the cultivation is hydroponic. In such cases, the substrate assists in the distribution of water and fertilizers, therefore not being necessary to adjust the watering nozzle very precisely.

However, in the case of aeroponic crops, misting must be done very precisely so that the water and fertilizer supply is perfectly distributed throughout the structure. When the structures move along a circuit, it is necessary to ensure the position of the watering nozzle.

On the other hand, one of the main costs of vertical farming is artificial illuminance which, depending on the type of crop, can reach up to 70% of the variable cost of production. The use of sunlight collectors, which use fiber optics to transmit sunlight into the greenhouse, has been explored. However, they do not achieve the energy required for efficient photosynthesis, typically 15 µmol-m² /s when compared to the average 150 µmol-m² /s required for photosynthesis. An example is given in US6037535.

The applicant is not aware of any solution equivalent to the one claimed.

### DESCRIPTION OF THE INVENTION

Because of all this, we propose an Installation of aeroponic cultivation with a new irrigation system on mobile vertical structures, that ensure the correct distribution and absorption of the nutritive solution and the simplification of the whole set, ensuring the exact irrigation for each structure.

The solution is an Installation of aeroponic cultivation, comprising an enclosure with one or more rails. The rails guide the carts carrying hollow vertical structures which support the plants. Their roots are oriented towards the inside of the structures. The installation comprises at least one irrigation point consisting of at least one atomization nozzle fed from one or more tanks. The nozzles are connected to a pipeline. The nozzles are movable in a direction parallel to the rail in their working area and they are configured to automatically align with the structure. For example, the nozzles are parallel to the rail when the rail is arranged above the structures.

In this way, the set of structures can be kept in continuous motion, using a few irrigation points, which are very easy to design with the necessary precision. In addition, any flow disturbance that modifies the nozzle output is easily repaired as the irrigation points can be placed within easy reach, reducing the need for aisles between rails.

An evacuation pipe or other water collection and recovery system, such as trays or a prepared floor, is provided at the bottom of the structure for the excess liquid to return to a tank, usually the starting tank.

In a preferred embodiment, the nozzles are associated with sensors configured to detect the position of the structure or the cart. The sensors may be optical, magnetic or induction sensors. Where appropriate, they will be connected to motors. For example, the nozzles may be mounted on a mechanical slide on a motor-driven endless screw. Turning the screw in one direction or the other will move the mechanical slide and the nozzle.

In another embodiment, the nozzles are configured to engage the cart when the cart enters a work zone and to release when the cart leaves the work zone. In this case, the nozzles comprise a return spring to the starting position. For example, the cart may have an extendable arm that extends when entering the work area and retracts when exiting. This type of arms can be made with a guide of the opposite end and adjusting its distance to the rest of the cart. When the guide is near, the arm extends. When it is far away, it retracts. It is also possible to have a return spring to the retracted position.

The system may comprise a photon illuminance gun consisting of one or more external lenses that capture the sun and concentrate the solar illuminance onto a photonic crystal fiber. The photonic crystal fiber is connected to one or more second diverging lenses inside the enclosure. Unlike the use of fiber optics, the photonic crystal fiber allows more power to be transmitted with less loss, so that the energy, in the form of photons, required by the plants (between 60 and 750 µmol-m² /s) can be achieved. The external lens will include filters to keep out undesired wavelengths.

The light circuit from the external lens to the second lenses can be cooled or ventilated. The heat captured in this way is used inside the greenhouse or discharged to the outside.

The transmission fiber is photonic crystal fiber of solid body and high energy transmission . It can be micro structured fiber of 5 µm diameter, capable of transmitting photons between 400 nm and 1200 nm at a rate of 220 µmol-m² /s.

The cart may include a rotating motor to reorient the structure. This ensures that all plants receive adequate light or watering.

Other variants and embodiments will be apparent in the description below.

### DESCRIPTION OF THE DRAWINGS

To complement the next description and to better understand the features of the invention, in accordance with a preferential example of practical implementation thereof, and for illustrative and non-limiting purposes, it is attached, as an integral part of this description, a set of drawings showing the following:
Figure 1.- Shows a top view of the whole installation according to an example of embodiment, in which the guides for the traction of the vertical structures and the position of the irrigation systems can be distinguished.
Figure 2.- Shows a detail of the upper part of a mobile structure, distinguishing the rail on which it runs and the feeding system.
Figure 3.- Figure 3 shows a detail in free view of the preferred model of the rail to irrigate by aeroponic spraying.
Figure 4.- Shows an example of a illuminating circuit by photon gun.

### PREFERRED EMBODIMENT OF THE INVENTION

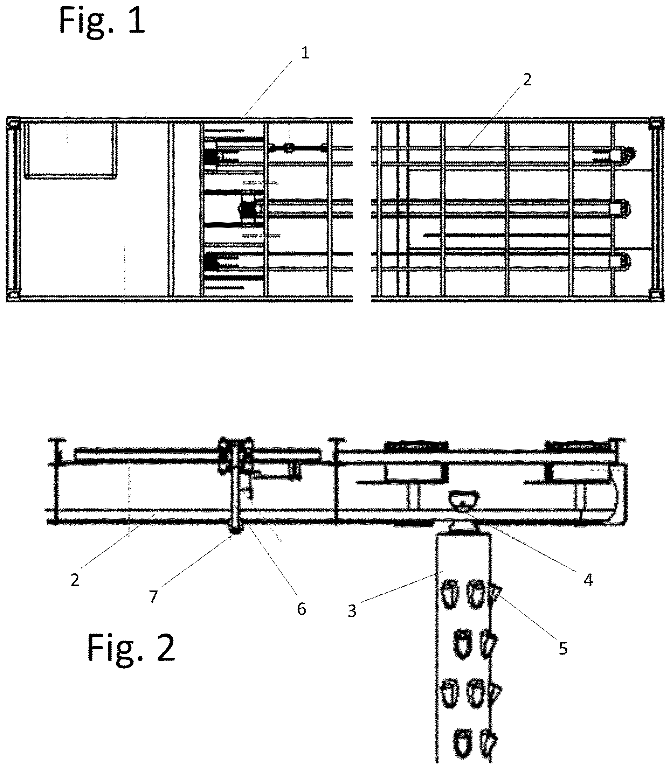

The accompanying figures show an example of an embodiment in which the crop is grown in an enclosure or limited space, such as an ISO container (1) recovered for this purpose (figure 1).

In the container (1), one or more rails (2) are arranged in a closed circuit, so that a series of hollow vertical structures (3), generally cylindrical, circulate along the rails (2) by means of carts (4). The structures (3) support plants (5) with their roots inside to be fed by aeroponic methods. The rails (2) are generally mounted on the ceiling, so that the structures (3) hang from them.

The container comprises a feeding system that pumps water, fertilizers, and any product to be supplied to the plants (5) by their roots. The feeding system comprises one or more tanks and pumps (not visible), a series of pipes (6) and nozzles (7) for misting or atomization which form irrigation points. The nozzles (7) are arranged above the structures (3) to deliver the liquid to the plants. At the base of the structures (3) there is a pipe for the evacuation of the surplus to a lower, fixed channel or tank, which returns to a tank. The supply system may include sensors (for pH, for example) to ensure that the irrigation has the optimum conditions.

In a relevant manner, the nozzles (7) are movable along part of the rail (2), for which the pipes (6) comprise a flexible section that can absorb these movements. Thus, the nozzles (7) can be automatically placed in the optimal position on the structures, regardless of the actual position of the structure. For this purpose, the nozzles (7) may comprise different control elements.

In a first embodiment, the nozzles (7) are coupled to the cart (4) when it enters its working area and are released when it reaches the end. A return spring returns them to the starting position when they are released to engage the next cart (4).

In a second embodiment, the structure (3) or the cart (4) wear marks (optical, magnetic...) that are used by a sensor that accompanies the nozzle (7) to detect the correct position and warns a motor that moves the nozzle (7) to the exact position. The sensor can also be an induction sensor to detect a metallic element in the structure (3) or in the cart (4).

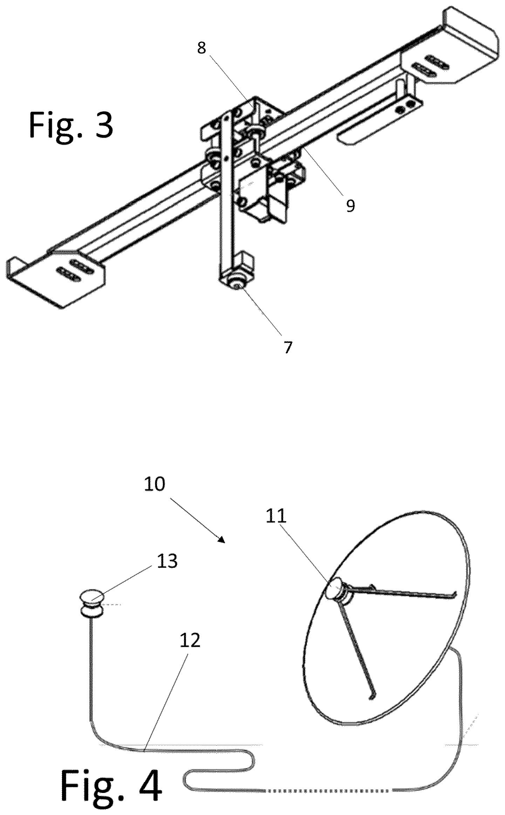

Figure 3 shows the preferred solution, where the nozzles (7) are mounted on a mechanical slide (8) on an endless screw or guide (9) driven by an electric motor.

As a secondary advantage, the nozzle (7) can follow the movement of the structure (3) if irrigation is carried out during a movement stage. For example, it allows to install one or few irrigation points with very high precision and efficacy, and to continuously move the structures (3) to pass through the irrigation points. This system means a great reduction of installation costs as the pumps, pipes (6) and equipment for recovering the excess liquid are simplified.

Preferably, the system will recognize the structure (3) under the nozzle (7), knowing at what stage of development the plants (5) are, to adapt the irrigation accordingly.

The interior of the container (1) can be illuminated by means of a photon gun (10) as shown in figure 4. It comprises one or more external lenses (11), for example a Fresnel lens, which concentrate the solar illumination on a photonic crystal fiber (12), which is introduced into the container (1). One or more second lenses (13) expand the light carried by the photonic crystal fiber (12) to reach as many plants (5) as possible. The photonic crystal fiber (12) can be divided into several branches to place second lenses (13) in various areas of the container (1) and to illuminate from various points.

The second lenses (13) can be supplemented by lights, for example LEDs, which supplement the necessary power, at the very base of the second lenses (13). The power of the lights will preferably be dimmable to adapt to the amount of light entering through the outer lens (11). A series of luminosity sensors in front of the second lenses (13) will allow the required power to be known.

The external lenses (11) can be connected to a sun tracker, which will conveniently orient them to receive the sun's rays at the best inclination. The tracker can be programmed according to the azimuth stored in astronomical tables in memory or comprise any other orientation system.

The cart (4) may comprise a rotating motor to reorient the structure (3) periodically or continuously to compensate for any defects in the illumination. Normally the carts (4) are mounted on a chain or belt that ensures the coordinated movement of all the carts (4).

The cultivation also comprises a number of common equipment: motors, areas for the maintenance or preparation of plants or shoots, etc. All these elements are known and are not relevant to the invention.

## Claims

1. Installation of aeroponic cultivation, comprising an enclosure with one or more rails (2) for guiding carts (4) carrying vertical hollow structures (3) supporting the plants (5), whose roots are oriented towards the inside of the structures (3), and at least one irrigation point formed by at least one atomization nozzle (7) fed from one or more tanks by means of pipes (6), the structures (3) having a lower evacuation pipe returning to a tank, **characterized in that** the nozzles (7) are movable in a direction parallel to the rail (2) and are configured to align automatically with the structure (3), and the pipes comprise a flexible section.

2. Installation according to claim 1, **characterized in that** the enclosure is an ISO container (1).

3. Installation according to claim 1, **characterized in that** the rails (2) are arranged above the structures (3).

4. Installation according to claim 1, **characterized in that** the nozzles (7) are associated with sensors configured to detect the position of the structure (3) or the cart (4).

5. Installation according to claim 1, **characterized in that** the nozzles (7) are configured to engaging the cart (4) when it enters a working area and releasing when the cart (4) leaves the working area, and the nozzles (7) comprise a return spring to the starting position.

6. Installation according to claim 4, **characterized in that** the nozzles (7) are mounted on a mechanical slide (8) on an endless screw, or a guide (9) driven by a motor.

7. Installation according to claim 1, **characterized in that** it comprises a photon gun (10) formed by one or more external lenses (11) which concentrates the solar illuminance on a photonic crystal fiber (12) connected to one or more second divergent lenses (13) inside the enclosure.

8. Installation according to claim 7, **characterized in that** the photon gun (10) comprises lights inserted in the base of the second lenses (13) controlled by sensors of illuminance.

9. Installation according to claim 1, **characterized in that** the cart (4) includes a rotating motor to reorient the structure (3).
